# EUROPEAN PATENT APPLICATION

(11) **EP 0 747 985 A1**
(43) Date of publication of application: **11.12.1996**
(21) Application number: 96304261.9
(22) Date of filing: 07.06.1996
(51) Int. Cl.: H01M 6/08, H01M 2/08, H01M 10/04, H01M 10/28

(54) **Cathode protection means for an electrochemical cell**

(30) Priority: 07.06.1995 US 479592
(71) Applicant: EVEREADY BATTERY COMPANY, INC., St. Louis Missouri 63164 (US)
(72) Inventor: Getz, Dale R., Westlake, OH 44145 (US)
(74) Representative: Lord, Hilton David

(57) **Abstract**

An electrochemical cell (1) comprising an anode (20) and a cathode (30) disposed in a can (10), the anode being of a material which can be caused to contact the cathode under abuse conditions, such as dropping, are protected in that the region of the cathode contactible by the anode by an overcoat (70), the overcoat eliminating or significantly reducing the occurrence of electrical shorting.

## Description

The present invention relates to a means to prevent contact between a cathode and an anode in a battery, and to a method of incorporating such means into a battery.

Standard alkaline batteries are susceptible to damage resulting from vibration, impacts, or other forces applied to the battery, such as being dropped onto a hard surface. Damage to C-cells or D-cells frequently occurs if the battery is dropped onto its negative terminal. Damage may also occur as a result of mishandling of batteries, such as frequently occurs during battery shipment from the manufacturer. During shipment, batteries are often inadvertently transported upside down, which can lead to damage from vibration, even if dropping of the battery does not occur. Dropping and mishandling can also occur after purchase by the consumer, resulting in damage to the battery.

Vibration or impact damage, as noted above, typically stems from electrical shorting, caused by contact occurring between cathode and anode within the battery, and this often results in battery failure. The problem is more pronounced if the cell utilises a flowable electrode material, as do many batteries. Moreover, relatively large cells, such as D-cells, are particularly susceptible to damage from dropping onto a hard surface, due to the additional mass of the battery. In some instances, the damage may not be total, and merely result in poor battery performance, generally exhibited as low open cell voltage, after the impact or dropping. The damage may even be exhibited after extended storage, and particularly at relatively high temperatures or exposure thereto. Electrical shorting may also occur during manufacture of the battery itself, resulting from anode material being dispensed onto exposed regions of the cathode.

Prior artisans have attempted to design batteries that are less susceptible to electrical shorting. Various battery seal designs have been provided in an attempt to prevent contact between anode and cathode from occurring. These attempts have mainly been unsuccessful. Containment methods have also been attempted to hold or otherwise restrain battery components in place within the battery to prevent contact between anode and cathode. This approach is undesirable due to the additional cost and labour associated with the containment components, and the additional volume taken up by the containment components, thereby reducing interior battery volume available for the electrochemically active materials.

Anode overcoats have been utilised to provide a coating over the anode in an attempt to prevent oxidation of the anode material. Although not employed to address the problem of electrical shorting, some anode overcoats may provide limited protection against electrical contact occurring between anode and cathode. However, such overcoats are difficult to apply to an anode incorporated in a battery or partially assembled battery, and thus are not commercially attractive. Moreover, it is undesirable to utilise anode overcoats, since they do not eliminate the possibility of shorting within the cell. That is, if the anode is a flowable material and is displaced, for instance upon dropping of the cell, the coating can fracture and allow the flowable anode material to flow onto the battery cathode and thereby make contact. Moreover, anode overcoats which overlie the anode surface facing the negative end of the battery often adhere to the current collector when this is pressed into the anode during assembly. Coating of the collector by the anode overcoat composition severely affects battery performance.

In general, disruptive forces may result from dropping a battery onto a hard surface, or from the battery impacting other batteries or objects during use. The amount of force necessary to cause electrical shorting varies depending upon a variety of factors including but not limited to, flowability or viscosity of the anode material, proximity of anode to cathode within the battery, cell configuration, location of the disrupting force applied to the battery, and temperature.

Thus, there is a need for a method of ensuring electrical separation between cathode and anode, which is relatively simple and inexpensive to incorporate into a battery, and which does not detrimentally affect battery performance. More especially, there is a need for a method of eliminating, or significantly reducing, the tendency of electrical shorting due to anode mobility, and which does not result in a significant reduction in interior battery volume, and which is economically attractive.

Surprisingly, we have now found that incorporating a cathode overcoat into a battery to cover exposed regions of the cathode achieves, for the very first time, a relatively simple yet elegant way to protect the cathode and to ensure separation between the cathode and anode, thus reducing the incidence of electrical shorting on the cathode shelf.

Thus, in a first aspect, the present invention provides an electrochemical cell comprising an anode and a cathode disposed in a can, the anode being of a material which can be caused to contact the cathode under abuse conditions, characterised in that the region of the cathode contactible by the anode is protected by an overcoat.

The overcoat should be such as to provide at least some protection from a flowable anode. The anode, in general, will not tend to flow, but abuse or disruptive conditions, such as dropping, can cause the anode material to flow past the separator and onto the cathode. It will be appreciated that contact between the anode material on the cathode must be maintained with the original anode material and, thereby, the current collector, in order for a short circuit to occur and/or to lead to low voltage performance. However, even the most tenuous of contact will be sufficient to impair the performance of the cell, especially after storage. Accordingly, any cell comprising an anode that is, in some way, able to make contact with the cathode can benefit from the present invention.

In general, the cathode is formed in the form of a pocket within the can, such as by placing a series of rings in the can, or filling the can with cathode material and then ramming a hole, both of which leave a central cavity to insert the separator and anode. In such a configuration, the only exposed area of the cathode is at the top of the can adjacent the top of the separator. This area is known as the cathode shelf. However, it will be appreciated that other battery configurations involving exposed areas of the cathode are equally subject to the present invention.

The form that the overcoat can take is any that is suitable to provide at least some protection from anode overspill. This will generally take the form of one of two embodiments, the first being a generally solid or resilient overcoat, the second being in the form of a gel, or a combination of the two. Nevertheless, other embodiments, such as a non-reactive oil coating, may also be used, and will be readily apparent to those skilled in the art.

In one embodiment, the present invention provides an electrochemical cell comprising:
a can;
an anode disposed within the can;
a cathode disposed within the can, the cathode having an exposed region susceptible to contact by the anode; and
a cathode overcoat disposed over the exposed region of the cathode for providing a protective barrier for the exposed region of the cathode thereby preventing contact between the anode and the exposed region of the cathode.

In an alternative embodiment, the present invention provides an electrochemical cell comprising a can, an anode and a cathode disposed in the can, and a cathode overcoat disposed over exposed regions of the cathode to provide protection for the cathode and to prevent contact from occurring between the electrodes. The cathode overcoat may be a solid material or a flowable material, and preferably comprises particular components.

The present invention will now be illustrated by reference to the accompanying drawings, in which:
Fig 1 is a cut-away view illustrating the major components of a standard alkaline battery and a first embodiment of a cathode overcoat in accordance with the present invention;
Figure 2 is a cut-away view illustrating a second embodiment cathode overcoat disposed in a standard alkaline battery, relatively soon after deposition into the battery;
Fig 3 illustrates the battery depicted in Figure 2 after the second embodiment overcoat has partially dried on the cathode shelf;
Figure 4 illustrates the battery depicted in Figure 3 after the second embodiment cathode overcoat has completely dried on the cathode shelf;
Figure 5 is a process schematic illustrating a process for depositing the second embodiment cathode overcoat into a plurality of batteries;
Figure 6 is a detail view illustrating a preferred embodiment dispensing nozzle for depositing the second embodiment cathode overcoat into a battery;
Figure 7 is a view of the underside of the preferred embodiment dispensing nozzle; and
Figure 8 is a graph summarising the results of comparative testing that was performed between batteries utilising the first embodiment cathode overcoat, the second embodiment cathode overcoat, combinations of the first and second embodiments, and batteries without any type of overcoat protection.

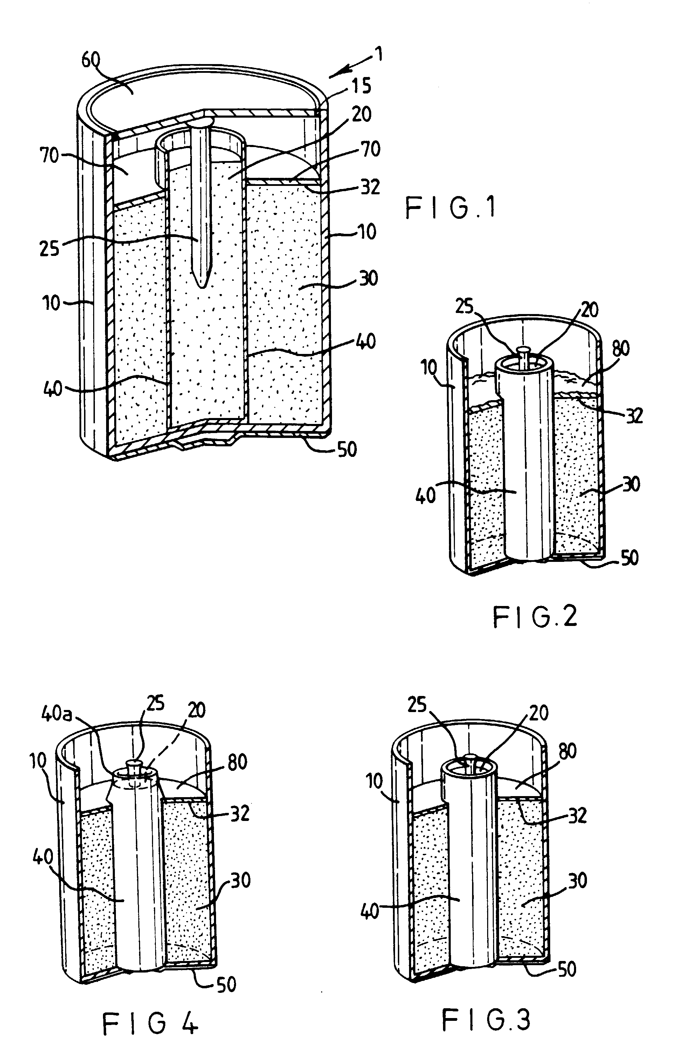

Figure 1 illustrates a typical standard alkaline battery 1 comprising a can 10 enclosing an anode 20, a current collector 25, a cathode 30, a bottom cover 50 in electrical association with cathode 30, serving as a first battery terminal, and a top cover 60 in electrical association with anode 20, serving as the second battery terminal. The second battery terminal is electrically separated from the first terminal and the can 10 by a suitable insulator 15. The upper, annular-shaped surface of cathode 30 is referred to herein as cathode shelf 32. The anode 20 and cathode 30 are arranged coaxially and are separated by a cylindrical ion-permeable separator basket 40. Battery 1 further comprises an electrolyte solution contained within the interior of the battery, for providing ionic conduction between the cathode and anode. The anode material in an assembled battery may be a liquid, albeit a relatively thick liquid, such as described in US-A-3,207,633.

Descriptions of typical battery constructions and materials utilised for anodes, cathodes, electrolytes, and separators are provided in US-A-5,248,568 and US-A-5,389,457 to Eveready. Other examples of materials suitable for forming separators are found in US-A-5,158,844.

The cathode overcoat of the present invention is a protective barrier disposed over exposed regions of the cathode that ensures electrical separation at such regions between those electrodes. In a first embodiment, the cathode overcoat is a solid, rigid or flexible barrier material disposed over the exposed regions of the cathode which, in an alkaline cell such as that depicted in the accompanying drawings, is primarily cathode shelf 32. In a second embodiment, the cathode overcoat is a flowable material that is dispensed onto the exposed regions, i.e. cathode shelf 32, which upon drying or at least partially solidifying, forms a protective barrier between the exposed regions of the cathode 30 and anode 20. The cathode overcoat provides protection for cathode 30 from electrical contact with the anode in the event the anode is displaced by impacts or forces applied to the battery.

In either the first or second embodiment of the invention, the cathode overcoat material utilised should provide a protective barrier for the exposed regions of the cathode, i.e. the exposed cathode shelf, and ensure separation between cathode and anode. The primary required characteristics of the overcoat material are that it be electrically non-conductive and chemically resistant to the battery materials or components such as the electrolyte.

In the first embodiment of the cathode overcoat, the cathode overcoat 70 is disposed on the exposed regions of a cathode, such as cathode shelf 32 illustrated in Figure 1. Overcoat 70 is a solid, rigid or flexible material, that may be a non-woven, cellulosic material, or a paper separator material such as is available from Dexter Company of Windsor Locks, Connecticut under the designation 11158 or 9258; or available from Nippon Kodoshi Corporation (NKK) of Agawagun, Kochi, Japan, under the designation VLZ105. However, many other materials are suitable, and will be readily apparent to those skilled in the art. For example, it may be appropriate to use a thin layer of plastic material, such as a polypropylene film.

The rigid or flexible material is cut or otherwise shaped, if necessary, for incorporation into a battery. For applications involving an exposed cathode shelf, such as shelf 32 illustrated in Figure 1, it is preferred to cut or form the rigid or flexible material into an annular or washer-like shape of the same size as the cathode shelf so that, when placed on the shelf, the shelf is entirely covered, or substantially so, by the cathode overcoat material. Where any gaps might be left, these may optionally be sealed by a suitable material, such as wax or bitumen, or other materials such as are illustrated in respect of the second embodiment.

In the second embodiment of the cathode overcoat, the cathode overcoat is preferably a flowable composition that dries, cures, or at least partially solidifies to form a protective barrier over the exposed regions of the cathode, such as cathode shelf 32. By "flowable" is meant flowable under manufacturing conditions and before any drying or other hardening occurs. Examples of preferred materials for the second embodiment of the overcoat include, but are not limited to, an aqueous mixture of starch, preferably potato starch, asphalt, and combinations thereof. In those instances where a combination of second embodiment cathode overcoat materials is utilised, it is preferred that the materials be separately applied upon the battery component or deposited within the battery, and not mixed together prior to deposition.

The most preferred composition for the second embodiment of the cathode overcoat is a mixture comprising about 20% starch (all percentages noted herein are percentages by weight unless indicated otherwise) about 79.4% water, about 0.5% of a 45% by volume aqueous mixture of KOH, and about 0.1% of a suspending agent which preferably is a water soluble vinyl polymer, such as Carbopol (registered trade mark) 940. It is particularly preferred to utilise potato starch as the starch component. The use of about 0.1% of a suspending agent has been found to facilitate dispensing and processing of the flowable cathode overcoat material. In applications where processing is not a concern, it is possible to utilise a mixture comprising about 20% starch, preferably potato starch, and about 80% water. Either of these preferred compositions can be formed by adding the components together in their respective amount, and mixing.

It will be appreciated that it is only necessary to prevent electrical contact occurring between the cathode and anode, should the anode be caused to flow onto the cathode. Thus, it is not necessary for the overcoat to be solid, and a relatively rigid gel may suffice, for example. Although thickness of the overcoat is not a particularly important feature of the present invention, other than for such general considerations as internal volume, it will be appreciated that any gel should be sufficiently thick to prevent contact between the anode and cathode.

Depending upon the amount of interior volume available in the battery, it is also preferred to incorporate both the first embodiment and second embodiment of the cathode overcoats in combination in the battery. The first embodiment cathode overcoat can be coated with the second embodiment flowable cathode overcoat, and the combination incorporated into the battery. Likewise, the first embodiment cathode overcoat can be coated with one type of the second embodiment flowable overcoat composition, such as asphalt, and that combination utilised in conjunction with additional amounts of the second embodiment overcoat composition, such as the starch composition or asphalt.

In addition to providing the previously noted features, the cathode overcoat material may also be selected to promote sealing and retainment between the anode and separator basket in standard alkaline cells. If the overcoat material swells upon uptake of a liquid electrolyte, the resulting increase in volume of the overcoat material can be utilised to assist in sealing the separator basket to anode, as explained in detail below. Moreover, the second embodiment cathode overcoat material also tends to bond with the separator basket thereby promoting sealing of the cathode from the anode.

The preferred amount of cathode overcoat material deposited onto the exposed cathode regions is an amount such that at least a majority of the exposed cathode regions are covered by the cathode overcoat, and most preferably is an amount effective to prevent electrical conduction through the overcoat to the cathode, such as which would otherwise occur during the previously described anode shorting. In applications in which the first embodiment cathode overcoat is utilised, it is preferred that the overcoat be a relatively thin layer, and most preferred that it have a thickness of from about 0.020" (0.51 mm) to about 0.100" (2.54 mm) or more. With regard to the second embodiment cathode overcoat, it has been found that for a standard alkaline D-cell having an annular-shaped cathode shelf, such as shelf 32 in Figures 1-4, the preferred amount of cathode overcoat, i.e. starch composition and/or asphalt, deposited onto the shelf, ranges from about 1.5 cm³ to about 5.0 cm³ or more, depending upon the amount of remaining volume desired in the upper portion of the cell.

The cathode overcoat can be incorporated into a battery in a variety of ways, primarily depending upon whether the overcoat is a rigid or flexible material in accordance with the first embodiment, or a flowable composition in accordance with the second embodiment. If the cathode overcoat is a rigid or flexible material, it may be incorporated in a battery by conventional assembly procedures. Of course, it might be necessary to appropriately cut or shape the cathode overcoat prior to insertion into the battery. If the cathode overcoat is a flowable material, it is preferably incorporated into a battery as described below with regard to Figures 2-7.

Figures 2-4 illustrate, in greater detail, the deposition of the second embodiment flowable cathode overcoat 80 onto cathode shelf 32 of a battery. Figure 2 illustrates a layer of cathode overcoat composition 80 formed on cathode shelf 32 relatively soon after its incorporation into the battery. The flowable composition 80 often has a consistency similar to a thick paste, and may be somewhat foam-like, as illustrated in Figure 2. After deposition of flowable overcoat composition 80 onto the cathode shelf, the composition will form a layer having a relatively uniform thickness. Figure 3 illustrates the battery depicted in Figure 2 after sufficient time has elapsed such that the overcoat 80 has settled and begun to harden or solidify. Figure 4 illustrates the battery depicted in Figure 3, after sufficient time has passed such that the overcoat composition 80 has dried to form a protective cathode overcoat on cathode shelf 32. It has been found that the most preferred second embodiment overcoat composition, i.e. an aqueous mixture comprising potato starch, completely dries, or substantially so, at room temperature in about 30 minutes. External heat can be applied and/or other drying means may be used to accelerate the drying phase, if desired.

Depending upon the composition of the cathode overcoat, it has been found that certain overcoat materials swell and increase in volume when exposed to a pre-wet solution and/or electrolyte. When the cathode overcoat is disposed on a cathode shelf surrounding the centrally disposed separator basket and anode, and a pre-wet solution or electrolyte is added to the battery, the cathode overcoat swells and causes the relatively delicate separator basket to be pushed inward towards the anode as illustrated in Figure 4 at 40a. Such expansion of the cathode overcoat promotes sealing of separator basket 40 around the periphery of anode 20.

The currently preferred process for incorporating the second embodiment flowable cathode overcoat into a battery, and for achieving swelling of that overcoat, thereby promoting sealing between the anode and separator basket, is as follows. Cathode material is deposited in the interior of a battery can having a closed bottom and open top. The cathode material is formed or pressed against the interior wall of the can thereby forming a concentric cavity extending along the axial dimension of the battery. Next, a separator basket is placed within the cylindrical cavity. At this point in the assembly process, it is preferred to deposit or form the cathode overcoat material over the exposed regions of the cathode, i.e. the cathode shelf. If the cathode overcoat is a combination of the previously described first and second overcoat embodiments, such as a ring-shaped paper separator material coated with an aqueous mixture of potato starch and/or asphalt, it is preferred that the ring be coated and that the coating be dried, or substantially so, prior to incorporating the cathode overcoat into the battery. If the cathode overcoat is in accordance with the second embodiment, dispensing is achieved as described below. Next, a pre-wet solution is dispensed into the can. The pre-wet solution generally comprises water or a glycol component, and/or a small amount of electrolyte. The anode material is then deposited within the separator basket in the interior of the can, electrolyte is added and the battery assembly completed.

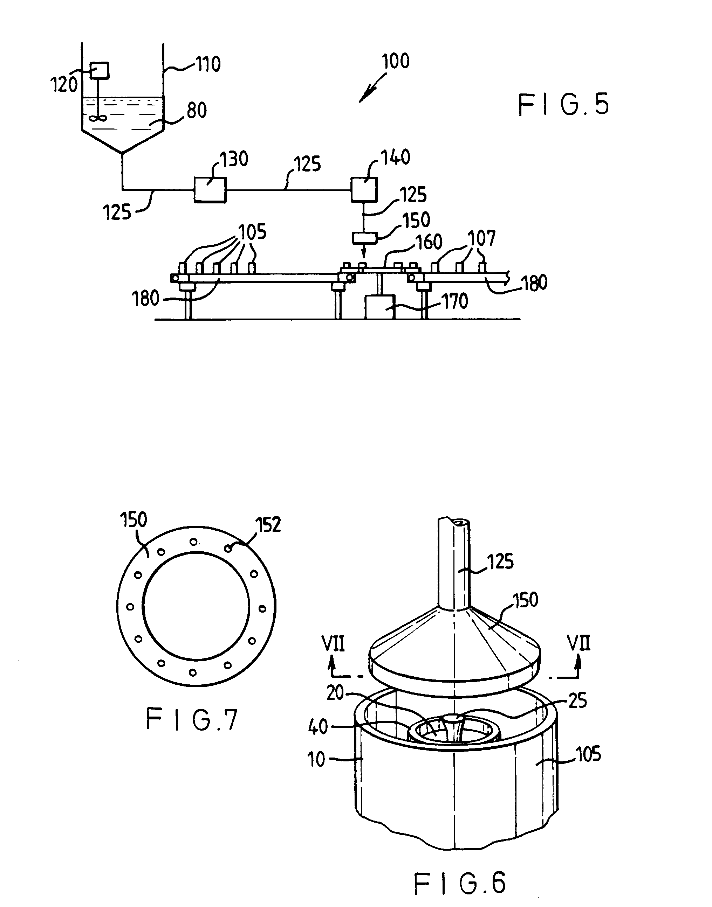

Flowable overcoats may be dispensed into one or more batteries in a variety of fashions. Figure 5 illustrates a preferred embodiment process for dispensing overcoat material 80 into a plurality of batteries 105 to be filled. Slurry tank 110 is provided for containing overcoat material 80. A mixer 120 is utilised to promote relatively uniform and homogenous characteristics of overcoat material 80. Discharge from tank 110 is directed by pump 130 through feed line 125 to metering unit 140. Metering unit 140 dispenses predetermined amounts of overcoat material 80 to dispensing nozzle 150. One or more conveyors 180 may be provided which transfer and direct batteries 105 to be filled to an indexing wheel 160 or other comparable device. Indexing wheel 160 is utilised in conjunction with a controller and drive assembly 170. Once filled with appropriate amounts of overcoat material 80, filled batteries 107 may be transferred to other phases of the process *via* one or more conveyors 180.

Figure 6 is a detailed perspective view of dispensing nozzle 150 and its placement over a battery 105 to be filled. Dispensing nozzle 150 is preferably shaped and of a size sufficient to fit within the annular region between can 10 and separator basket 40 such that overcoat material 80 is dispensed only within that annular region and not outside can 10 or within the interior of separator basket 40. Figure 7 illustrates the underside of dispensing nozzle 150, particularly illustrating a plurality of dispensing apertures 152 located about the periphery of nozzle 150. This arrangement of apertures 152 promotes uniform dispensing into the annular void.

### TEST EXAMPLE

A series of drop test experiments were conducted in which the performance of standard alkaline D-cells having no type of electrode overcoat was compared to the performance of standard alkaline D-cells having various combinations of cathode overcoats in accordance with the present invention. Drop testing was performed by dropping a cell through a cylindrical tube such that the cell's negative terminal struck a hard surface. Each cell was dropped 5 times from a height of 3 feet. After the drop tests, all batteries were stored at 71°C for a period of one week. All cells were then tested for low voltage, which is indicative of electrical shorting or other damage having occurred within the battery. The cathode overcoat materials utilised in accordance with the first embodiment of the present invention were separator rings formed from paper separator materials available from Dexter under the designation 11158 or 9258 and from NKK under the designation VLZ105. The cathode overcoat materials utilised in accordance with the second embodiment of the present invention were an overcoat composition comprising 20% potato starch and 80% water deposited onto the cathode shelf; an asphalt material deposited onto the cathode shelf; and an asphalt material deposited on a previously described separator ring.

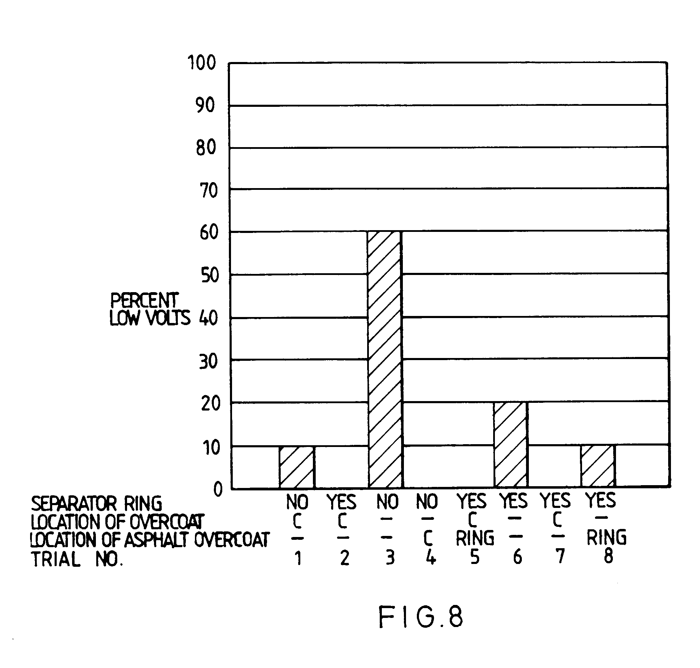

Referring to Figure 8, in a first trial, 10 cells, each containing 1.5 cm³ of a cathode overcoat material disposed onto the exposed cathode shelf of a battery in accordance with the second embodiment of the present invention, were drop tested. After undergoing the one-week storage period, 10% of the cells tested exhibited a low voltage output.

In a second trial, 10 cells each containing a cathode overcoat combining both the first embodiment and second embodiment, i.e. a paper separator material from Dexter, in combination with 1.5 cm³ of the cathode overcoat material utilised in the first trial, were drop tested and then stored as previously described. There were no measured failures.

In a third trial, 10 standard alkaline cells, with no modifications and containing no cathode overcoat of any type, were drop tested and subjected to the one week storage period. Sixty percent exhibited a low voltage.

In a fourth trial, 10 cells were modified by depositing an asphalt cathode overcoat composition onto the cathode shelf in accordance with the second embodiment of the present invention. All cells were drop tested and stored as previously described. There were no measured failures or low voltage cells.

In a fifth trial, 10 cells were tested, each cell containing cathode overcoats combining the first and second embodiments, i.e. a Dexter paper separator ring in combination with 1.5 cm³ of a potato starch cathode overcoat composition. In addition, the paper separator ring was coated with an asphalt composition in accordance with the second embodiment. After drop testing and storage as previously described, there were no measured failures or low voltage cells.

In a sixth trial, 10 cells, each having a separator ring formed from a paper separator material available from NKK in accordance with the first embodiment of the present invention were tested and stored. The percentage of cells with a low voltage output after storage was 20%.

In a seventh trial, 10 cells, each having a paper separator ring from NKK and containing 1.5 cm³ of the potato starch cathode overcoat composition according to the second embodiment were tested and stored. There were no measured failures or low voltage outputs.

In an eighth trial, 10 cells, each utilising a paper separator ring from Dexter that was coated with asphalt were tested and stored. Ten percent of the cells exhibited a low voltage output after drop testing and storage.

The results are shown in Figure 8. The "C" reference indicates the overcoat composition being deposited on the cathode shelf. The results of the testing clearly demonstrate that cells with cathode protection, i.e. trials 1-2 and 4-8, dramatically outperformed cells without cathode protection, i.e. trial 3. That is, 60% of the cells without any cathode protection, i.e. those tested in trial 3, exhibited a low open circuit voltage reading. In contrast, none of the cells tested in trials 2, 4, 5, and 7 exhibited a low voltage reading. Moreover, only 10 % of the cells tested in trials 1 and 8 exhibited a low voltage reading, and only 20% of the cells tested in trial 6 exhibited a low voltage reading. Furthermore, the testing indicates that particularly desirable battery performance is obtained, i.e. resistance to impacts and vibration, when a combination of the first and second embodiments of cathode overcoats are incorporated in a battery.

## Claims

1. An electrochemical cell comprising an anode and a cathode disposed in a can, the anode being of a material which can be caused to contact the cathode under abuse conditions, characterised in that the region of the cathode contactible by the anode is protected by an overcoat.

2. A cell according to claim 1, wherein the cathode overcoat covers at least a majority of the exposed region of the cathode.

3. A cell according to claim 1 or 2, wherein the cathode overcoat is a rigid or flexible material.

4. A cell according to any preceding claim, wherein the cathode overcoat is a thin layer.

5. A cell according to any preceding claim, wherein the cathode overcoat has a thickness of from about 0.090 inches (2.3 mm) to about 0.100 inches (2.5 mm).

6. A cell according to any preceding claim, wherein the cathode overcoat has an annular shape.

7. A cell according to any preceding claim, wherein the cathode overcoat comprises a non-woven cellulosic material.

8. A cell according to claim 7, wherein the cathode overcoat is a paper separator material.

9. A cell according to any of claims 1, 2 , 4, 5 or 6, wherein the cathode overcoat is a flowable composition.

10. A cell according to claim 9, wherein the cathode overcoat composition is an aqueous mixture of starch, asphalt, or a combination thereof.

11. A cell according to claim 9 or 10, wherein the cathode overcoat composition comprises about 20% starch; and about 80% water.

12. A cell according to claim 9, 10 or 11, wherein the cathode overcoat composition further comprises about 0.5% of 45% KOH.

13. A cell according to any of claims 9 to 12, wherein the cathode overcoat composition further comprises about 0.1% of a suspending agent.

14. A cell according to claim 13, wherein the suspending agent is Carbopol 940.

15. A cell according to any of claims 9 to 14, wherein the starch is potato starch.

16. A cell according to any of claims 9 to 15, wherein the battery further comprises a separator disposed between the anode and the cathode, and the cathode overcoat composition bonds to the separator to promote sealing of the cathode from the anode.

17. A cell according to any preceding claim, wherein the cathode overcoat comprises both a rigid or flexible material and a flowable composition.

18. A cell according to any preceding claim, wherein the cathode overcoat is electrically non-conductive and chemically resistant to battery components.

19. A cell according to any preceding claim, wherein the overcoat overlies the cathode shelf.
